# EUROPÄISCHE PATENTSCHRIFT

(11) **EP 3 174 181 B1**
(45) Veröffentlichungstag und Bekanntmachung des Hinweises auf die Patenterteilung: **17.02.2021**
(21) Anmeldenummer: 16198721.9
(22) Anmeldetag: 14.11.2016
(51) Int. Cl.: H02K 11/215, H02K 7/06

(54) **ANTRIEBSEINRICHTUNG**
DRIVE DEVICE
DISPOSITIF D'ENTRAÎNEMENT

(30) Priorität: 26.11.2015 DE 102015120563
(43) Veröffentlichungstag der Anmeldung: 31.05.2017
(73) Patentinhaber: Stabilus GmbH, 56070 Koblenz (DE)
(72) Erfinder: Reifenhäuser, Markus, 57632 Burglahr (DE); Kronz, Kathrin, 56858 Mittelstrimmig (DE); Bochen, Jan, 56337 Eitelborn (DE)
(74) Vertreter: Klein, Thomas

(56) Entgegenhaltungen:
- CN-U- 204 597 658
- DE-A1-102010 053 225
- DE-A1-102011 001 347
- US-A- 4 857 784
- US-A- 5 877 568
- US-A1- 2010 181 853

## Beschreibung

Die Erfindung bezieht sich auf eine Antriebseinrichtung zur motorischen Verstellung eines beweglichen Bauteils eines Kraftfahrzeugs, mit einem Gehäuserohr, in dem ein rotatorischer Elektromotor angeordnet ist, der ein Gehäuse aufweist, das von einer Endkappe verschlossen ist, wobei der Elektromotor einen Rotor mit einem radial magnetisierten Permanentmagneten aufweist, mit einer in einem bestimmten Abstand zum Elektromotor angeordneten Sensoreinrichtung zur berührungslosen Erfassung der Drehbewegung des Rotors des Elektromotors, die wenigstens einen auf einer Trägerplatine angeordneten Hall-Sensor aufweist, wobei die Trägerplatine von einem Stützring getragen ist, der axial an dem Gehäuse des Elektromotors abgestützt in dem Gehäuserohr angeordnet ist.

Bei einer derartigen Antriebseinrichtung dient der Stützring dazu den bestimmten Abstand des Hall-Sensors oder der Hall-Sensoren zu den Permanentmagneten des Rotors zu definieren, damit die Hall-Sensoren optimal das bei der Drehbewegung des Rotors variierend auf die Hall-Sensoren einwirkende Magnetfeld des Permanentmagneten erfassen können. Dazu dürfen die Hall-Sensoren nicht zu weit entfernt aber auch nicht zu nah an dem Rotor angeordnet sein.

Aus der DE 10 2011 001 347 A1 ist ein Gleichstrom-Elektromotor bekannt, der für Fensterheber, Sitze Scheibenwischer und andere Anwendungen in Fahrzeugen verwendet werden kann. Der Gleichstrom-Elektromotor weist einen auf einer Trägerplatine angeordneten Hall-Sensor auf, der bei Drehbewegung eines mit Permanentmagneten versehenen Rotors das variierend auf den Hall-Sensor einwirkende Magnetfeld der Permanentmagneten erfassen kann. Dabei ist eine radiale Anordnung zueinander von Permanentmagneten und Hall-Sensor vorhanden.

Aus der DE 10 2010 053 225 A1 ist eine Antriebseinrichtung mit einem Gehäuserohr bekannt, in dem ein rotatorischer Elektromotor angeordnet ist, der ein Gehäuse aufweist. Der Elektromotor weist einen Rotor auf. In einem bestimmten Abstand zum Elektromotor ist eine Sensoreinrichtung zur berührungslosen Erfassung der Drehbewegung der an der Motorantriebswelle außerhalb des Elektromotors angeordneten Permanentmagnete vorhanden, die wenigstens einen auf einer Trägerplatine angeordneten Hall-Sensor aufweist, wobei die Trägerplatine von einem Sensorgehäuse getragen ist, der axial an dem Gehäuse des Elektromotors abgestützt in dem Gehäuserohr angeordnet ist.

Aus der CN 204 597 658 U ist ein rotatorischer Elektromotor bekannt, der ein Gehäuse aufweist, das von einer Endkappe verschlossen ist. Der Elektromotor weist einen Rotor mit einem umlaufend magnetisierten Permanentmagneten auf. In einem Abstand zum Elektromotor ist eine Sensoreinrichtung zur berührungslosen Erfassung der Drehbewegung des Rotors des Elektromotors vorhanden, die wenigstens einen auf einer Trägerplatine angeordneten Hall-Sensor aufweist, wobei die Trägerplatine von einem Isolierteil getragen ist, der axial an den Blechscheiben eines Stators des Elektromotors abgestützt ist. Der Hall-Sensor befindet sich in einem axialen Abstand zu den Permanentmagneten des Rotors des Elektromotors.

Aufgabe der Erfindung ist es eine Antriebseinrichtung der eingangs genannten Art zu schaffen, die bei einfachem Aufbau eine einfache Montage ermöglicht.

Diese Aufgabe wird erfindungsgemäß durch eine Antriebseinrichtung gemäß des unabhängigen Anspruchs 1 gelöst, wobei sich der Hall-Sensor in einem bestimmten axialen Abstand zu den Permanentmagneten des Rotors des Elektromotors befindet und das Magnetfeld des Permanentmagneten des Rotors des Elektromotors von dem Hall-Sensor erfasst wird und der Stützring formschlüssig und/oder kraftschlüssig mit dem Gehäuse des Elektromotors verbunden ist.

Dies hat den Vorteil, daß bei der Montage des Elektromotors der formschlüssig und/oder kraftschlüssig mit dem Elektromotor verbundene Stützring nicht nur mit in das Gehäuserohr eingesetzt werden kann, sondern auch an dem Elektromotor gehalten ist. Der Stützring kann dadurch bevor weitere den Stützring fixiernde Bauteile in das Gehäuserohr eingesetzt werden, in seiner Sollposition gehalten werden und nicht aus dem Gehäuserohr herausfallen und den Montageablauf stören.

Ist dabei der Stützring mittels einer Rastverbindung mit dem Elektromotor verbunden, so sind zur Montage des Stützrings an den Elektromotor keine besonderen Werkzeuge erforderlich. Ein einfaches Verrasten stellt die Verbindung her.

Dazu kann der Stützring ein oder mehrere axiale Haltearme aufweisen, die in entsprechende Haltenuten am dem Stützring zugewandten Endbereich des Elektromotors ragen, wobei die Haltearme ein oder mehrere Rastansätze aufweisen, die in entsprechende Rastausnehmungen in einer oder mehreren der Wände der Haltenuten eingreifen oder kraftschlüssig an einer oder mehreren der Wände der Haltenuten in Anlage sind.

Damit sind für die Verbindung des Stützrings mit dem Elektromotor keine separat zu montierenden Bauteile erforderlich, was die Montage der Antriebseinrichtung stark vereinfacht.

Die Antriebseinrichtung kann z.B. zum Bewegen einer Tür oder Klappe eines Kraftfahrzeugs dienen.

Sind dabei der oder die Haltearme am radial umlaufenden Mantelbereich des Stützrings angeordnet, so können sie nicht das von den Hall-Sensoren zu erfassende Magnetfeld beeinträchtigen.

Zur Unterstützung des Haltens des Stützrings am Elektromotor wird dadurch erreicht, daß die Haltearme radial nach innen federnd ausgebildet sind.

Zur einfachen Sicherstellung des bestimmten Abstands der Sensoreinrichtung zum Rotor kann der Stützring im Bereich neben dem Haltearm ein oder mehrere zum Elektromotor gerichtete Abstandshalter aufweisen, die mit den Stirnseiten ihrer freien Enden in Anlage an der dem Stützring zugewandten Stirnseite des Elektromotors in Anlage sind.

Damit im Betrieb der Antriebseinrichtung der Stützring in seiner Sollposition sicher gehalten wird, kann der Stützring von einem elastischen Bauteil gegen den Elektromotor beaufschlagt sein.

In einfacher Ausbildung und leicht montierbar kann dabei das elastische Bauteil ein ring- oder scheibenartiges Bauteil aus einem elastischen Werkstoff wie z.B. Gummi sein, das den Stützring auf seiner dem Elektromotor abgewandten Seite beaufschlagt und am Gehäuserohr oder einem mit dem Gehäuserohr verbundenen Bauteil abgestützt ist. Ist dabei das ring- oder scheibenartige Bauteil mit seiner dem Stützring abgewandten Seite an einem das Gehäuserohr verschließenden Verschlusskappe abgestützt, kann das ring- oder scheibenartige Bauteil ein durch Einlegen in das Gehäuserohr einfach montierbares Bauteil sein.

Vorzugsweise ist von dem Elektromotor ein eine Gewindespindel und eine Spindelmutter aufweisender Spindeltrieb drehbar antreibbar.

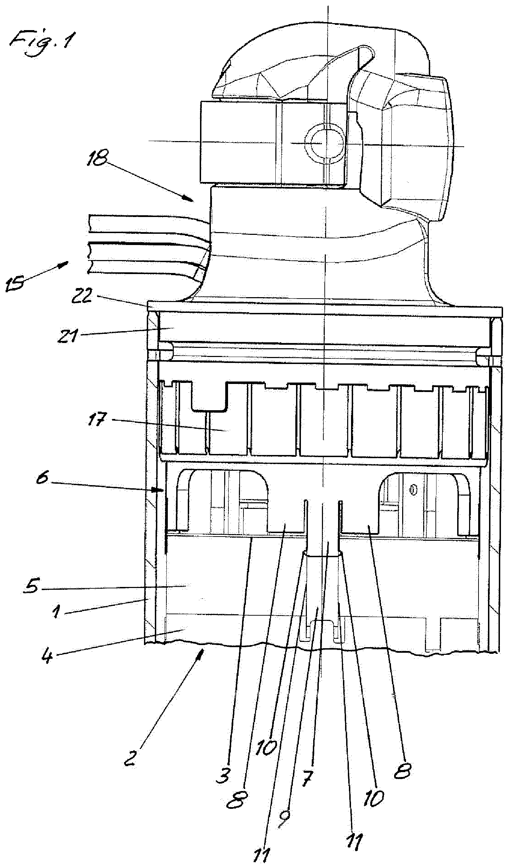

Ein Ausführungsbeispiel der Erfindung ist in der Zeichnung dargestellt und wird im Folgenden näher beschrieben. Es zeigen
- Figur 1: einen Längsschnitt eines Endbereichs einer Antriebseinrichtung

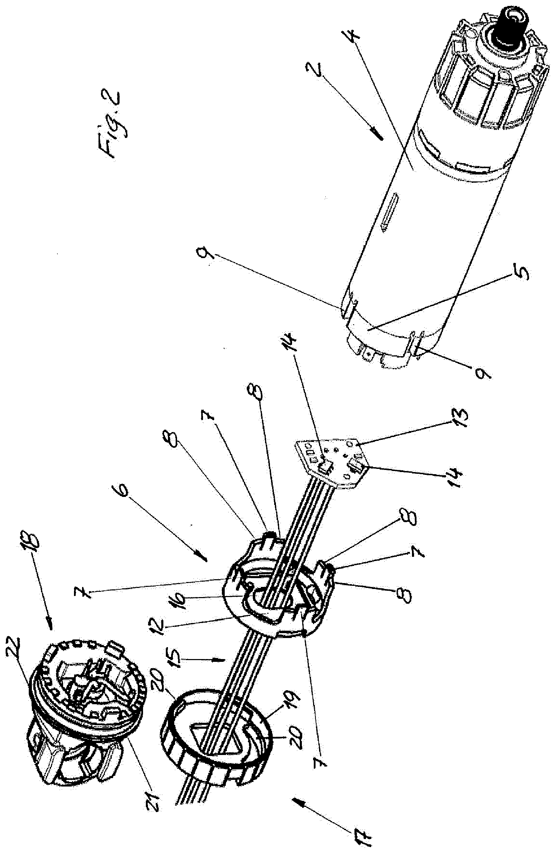

- Figur 2: eine perspektivische Explosionsdarstellung der Teile des Endbereichs der Antriebseinrichtung nach Figur 1

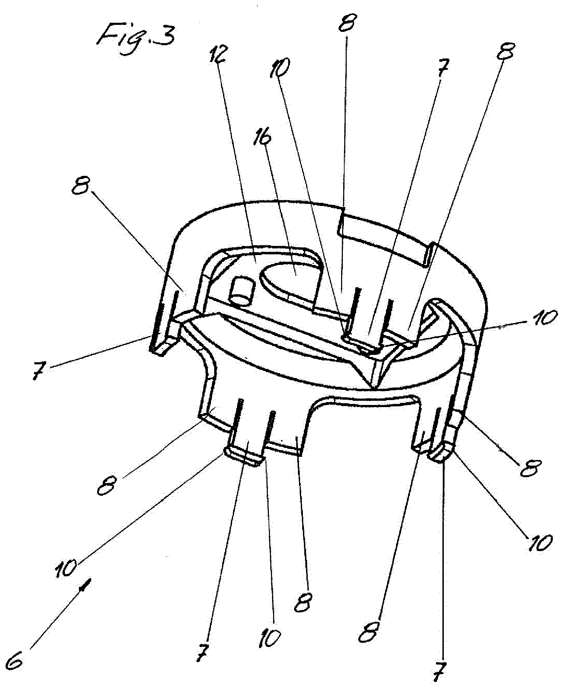

- Figur 3: eine Perspektivdarstellung eines Stützrings der Antriebseinrichtung nach Figur 1.

Die in den Figuren dargestellte Antriebseinrichtung weist ein Gehäuserohr 1 auf, in dessen einem Endbereich ein Elektromotor 2 angeordnet ist. Von dem Elektromotor 2 kann auf der diesem Endbereich abgewandten Seite z.B. über ein Getriebe und ggf. eine Überlastkupplung eine Gewindespindel eines Spindeltriebs drehbar angeordnet sein, auf der eine drehfeste aber axial verschiebbare Spindelmutter angeordnet sein kann. Diese von dem Elektromotor 2 antreibbaren Bauteile sind nicht dargestellt.

Der Elektromotor 2 ist ein rotatorischer Elektromotor 2 mit einem nicht dargestellten Rotor, der einen radial magnetisierten Permanentmagneten aufweist. Dem Ende des Gehäuserohres 1 zugewandt ist das Gehäuse 4 des Elektromotors 2 von einer Endkappe 5 verschlossen. Der radial magnetisierte Permanentmagnet ist in einem festen axialen Abstand zur Stirnseite 3 des Elektromotors 2 angeordnet, die durch die Stirnseite der Endkappe 5 gebildet ist.

Stirnseitig des Elektromotors 2 ist ein Stützring 6 in das Gehäuserohr 1 eingeführt, der an seinem Umfang gleichmäßig verteilt vier axial zum Elektromotor gerichtete Haltearme 7 aufweist, neben denen in Umfangsrichtung beidseitig jeweils ein Abstandshalter 8 des Stützrings 6 angeordnet ist, wobei die Erstreckung der Haltearme 7 zum Elektromotor 2 hin größer ist als die Erstreckung der Abstandshalter 8 zum Elektromotor hin.

Der Stützring 6 ist bis zur Anlage der Abstandshalter 8 an der Stirnseite 3 des Elektromotors 2 in das Gehäuserohr eingeführt.

Dabei ragen die Haltearme 7 in axiale Haltenuten 9, die an der radial umlaufenden Mantelfläche der Endkappe 5 ausgebildet sind.

An ihren dem Elektromotor zugewandten freien Enden weisen die Haltearme 7 in radialer Umfangsrichtung hervorstehende Rastansätze 10 auf, die bei in die Haltenuten 9 eingeführten Haltearmen 7 kraftschlüssig an den einander gegenüberliegenden Seitenwänden 11 der Haltenuten 9 in Anlage sind.

Durch diese kraftschlüssige Verbindung ist der Stützring 6 an dem Elektromotor 2 gehalten und kann bei der weiteren Montage der Antriebseinrichtung nicht von dem Elektromotor 2 abfallen.

Der Stützring 6 weist an seinem dem Elektromotor 2 abgewandten Endbereich eine sich radial erstreckende Trägerplatte 12 auf, an der eine Trägerplatine 13 angeordnet ist, die auf ihrer dem Elektromotor 2 zugewandten Seite zwei in einem Abstand in Umfangsrichtung zueinander angeordnete Hall-Sensoren 14 trägt.

Durch die an der Stirnseite 3 des Elektromotors 2 anliegenden Abstandshalter 8 befinden sich die Hall-Sensoren 14 in einem bestimmten axialen Abstand zu dem Elektromotor 2 und damit auch zu dem Permanentmagneten des Rotors des Elektromotors 2.

Dieser bestimmte Abstand ist so definiert, dass das sich mit dem Rotor drehende Magnetfeld des Permanentmagneten zumindest annähernd optimal von den Hall-Sensoren 14 erfasst werden kann.

Die dabei von den Hall-Sensoren 14 erzeugten Signale werden über Leitungen 15 aus der Antriebseinrichtung zu einer nicht dargestellten Auswerteeinrichtung geleitet, von der aus diesen Signalen Informationen über die Umdrehungsanzahl und Drehposition des Rotors des Elektromotors ableitet werden. Daraus können wiederum die jeweilige Position des Spindeltriebs und/oder die Verstellgeschwindigkeit abgeleitet werden.

Diese Leitungen 15 führen durch eine Ausnehmung 16 in der Trägerplatte 12, durch den Innenraum eines ringartigen Bauteils 17 aus Gummi und durch eine Durchführung in einer das Gehäuserohr 1 verschließenden Verschlusskappe 18 nach außen.

Das ringartige Bauteil 17 aus Gummi besteht aus einem Hülsenteil 19 gleichen Außendurchmessers wie dem Innendurchmesser des Gehäuserohres 1. In seinem dem Stützring 6 abgewandten Endbereich weist das Hülsenteil 19 radial nach innen gerichtete Anschläge 20 auf. Der Stützring 6, der einen Außendurchmesser aufweist, der dem Innendurchmesser des Hülsenteils 19 entspricht, ist in das Hülsenteil 19 bis zur Anlage an den Anschlägen 20 eingesetzt.

Dadurch bewirkt das ringartige Bauteil 17 zusammen mit dem Stützring 6 eine Entkopplung der Schwingungen des Elektromotors 2 während des Betriebs der Antriebseinrichtung und somit auch eine Geräuschentkopplung, die die akustischen Eigenschaften der Antriebseinrichtung verbessert.

Das ringartige Bauteil 17 aus Gummi liegt über seine Anschläge 20 mit einer geringen Vorspannung an der dem Elektromotor 1 abgewandten Seite der Trägerplatte 12 des Stützrings 6 an und ist mit seiner anderen Seite an einem zylindrischen Teil 21 der Verschlusskappe 18 abgestützt. Das zylindrische Teil 21 der Verschlusskappe 18 weist einen dem Innendurchmesser des Gehäuserohres 1 entsprechenden Außendurchmesser auf und ist damit bis zu einem radial umlaufenden Flansch 22 in das Gehäuserohr 1 eingesetzt sowie in dieser Position durch radiales Bördeln des Gehäuserohres 1 fixiert.

### Bezugszeichenliste

- 1: Gehäuserohr
- 2: Elektromotor
- 3: Stirnseite
- 4: Gehäuse
- 5: Endkappe
- 6: Stützring
- 7: Haltearme
- 8: Abstandshalter
- 9: Haltenuten
- 10: Rastansätze
- 11: Seitenwände
- 12: Trägerplatte
- 13: Trägerplatine
- 14: Hall-Sensoren
- 15: Leitungen
- 16: Ausnehmung
- 17: ringartiges Bauteil
- 18: Verschlusskappe
- 19: Hülsenteil
- 20: Anschläge
- 21: zylindrisches Teil
- 22: Flansch

## Patentansprüche

1. Antriebseinrichtung zur motorischen Verstellung eines beweglichen Bauteils eines Kraftfahrzeugs, mit einem Gehäuserohr (1), in dem ein rotatorischer Elektromotor (2) angeordnet ist, der ein Gehäuse (4) aufweist, das von einer Endkappe (5) verschlossen ist, wobei der Elektromotor (2) einen Rotor mit einem radial magnetisierten Permanentmagneten aufweist, mit einer in einem bestimmten Abstand zum Elektromotor (2) angeordneten Sensoreinrichtung zur berührungslosen Erfassung der Drehbewegung des Rotors des Elektromotors (2), die wenigstens einen auf einer Trägerplatine (13) angeordneten Hall-Sensor (14) aufweist, wobei die Trägerplatine (13) von einem Stützring (6) getragen ist, der axial an dem Gehäuse (4) des Elektromotors (2) abgestützt in dem Gehäuserohr (1) angeordnet ist, **dadurch gekennzeichnet, dass** sich der Hall-Sensor (14) in einem bestimmten axialen Abstand zu den Permanentmagneten des Rotors des Elektromotors (2) befindet und das Magnetfeld des Permanentmagneten des Rotors des Elektromotors (2) von dem Hall-Sensor (14) erfasst wird und der Stützring (6) formschlüssig und/oder kraftschlüssig mit dem Gehäuse (4) des Elektromotors (2) verbunden ist.

2. Antriebseinrichtung nach Anspruch 1, **dadurch gekennzeichnet, dass** der Stützring (6) mittels einer Rastverbindung mit dem Elektromotor (2) verbunden ist.

3. Antriebseinrichtung nach einem der vorhergehenden Ansprüche, **dadurch gekennzeichnet, dass** der Stützring (6) ein oder mehrere axiale Haltearme (7) aufweist, die in entsprechende Haltenuten (9) am dem Stützring (6) zugewandten Endbereich des Elektromotors (2) ragen, wobei die Haltearme (7) ein oder mehrere Rastansätze (10) aufweisen, die in entsprechende Rastausnehmungen in einer oder mehreren der Wände der Haltenuten eingreifen oder kraftschlüssig an einer oder mehreren der Wände (11) der Haltenuten (9) in Anlage sind.

4. Antriebseinrichtung nach Anspruch 3, **dadurch gekennzeichnet, dass** der oder die Haltearme (7) am radial umlaufenden Mantelbereich des Stützrings (6) angeordnet sind.

5. Antriebseinrichtung nach einem der Ansprüche 3 und 4, **dadurch gekennzeichnet, dass** die Haltearme radial nach innen federnd ausgebildet sind.

6. Antriebseinrichtung nach einem der Ansprüche 3 bis 5, **dadurch gekennzeichnet, dass** der Stützring (6) im Bereich neben dem Haltearm (7) ein oder mehrere zum Elektromotor (2) gerichtete Abstandshalter (8) aufweist, die mit den Stirnseiten ihrer freien Enden in Anlage an der dem Stützring (6) zugewandten Stirnseite (3) des Elektromotors (2) in Anlage sind.

7. Antriebseinrichtung nach einem der vorhergehenden Ansprüche, **dadurch gekennzeichnet, dass** der Stützring (6) von einem elastischen Bauteil gegen den Elektromotor (2) beaufschlagt ist.

8. Antriebseinrichtung nach Anspruch 7, **dadurch gekennzeichnet, dass** das elastische Bauteil ein ring- oder scheibenartiges Bauteil (17) aus einem elastischen Werkstoff ist, das den Stützring (6) auf seiner dem Elektromotor (2) abgewandten Seite beaufschlagt und am Gehäuserohr oder einem mit dem Gehäuserohr (1) verbundenen Bauteil abgestützt ist.

9. Antriebseinrichtung nach Anspruch 7, **dadurch gekennzeichnet, dass** das ring- oder scheibenartige Bauteil (17) mit seiner dem Stützring (6) abgewandten Seite an einem das Gehäuserohr (1) verschließenden Verschlusskappe (18) abgestützt ist.

10. Antriebseinrichtung nach einem der vorhergehenden Ansprüche, **dadurch gekennzeichnet, dass** von dem Elektromotor (2) ein eine Gewindespindel und eine Spindelmutter aufweisender Spindeltrieb drehbar antreibbar ist.

## Claims

1. Drive device for the motorized adjustment of a movable component of a motor vehicle, having a housing tube (1) in which there is arranged a rotary electric motor (2) which has a housing (4) which is closed by an end cap (5), wherein the electric motor (2) has a rotor with a radially magnetized permanent magnet, and having a sensor device arranged at a specific distance from the electric motor (2) and intended for contactlessly detecting the rotary movement of the rotor of the electric motor (2), said sensor device having at least one Hall sensor (14) arranged on a carrier board (13), wherein the carrier board (13) is borne by a support ring (6) which is arranged in the housing tube (1) while being axially supported on the housing (4) of the electric motor (2), **characterized in that** the Hall sensor (14) is situated at a specific axial distance from the permanent magnet of the rotor of the electric motor (2), and the magnetic field of the permanent magnet of the rotor of the electric motor (2) is detected by the Hall sensor (14), and the support ring (6) is connected to the housing (4) of the electric motor (2) in a form-fitting and/or force-fitting manner.

2. Drive device according to Claim 1, **characterized in that** the support ring (6) is connected to the electric motor (2) by means of a latching connection.

3. Drive device according to either of the preceding claims, **characterized in that** the support ring (6) has one or more axial retaining arms (7) which project into corresponding retaining grooves (9) at the end region of the electric motor (2) that faces the support ring (6), wherein the retaining arms (7) have one or more latching lugs (10) which engage in corresponding latching cut-outs in one or more of the walls of the retaining grooves or bear in a force-fitting manner against one or more of the walls (11) of the retaining grooves (9).

4. Drive device according to Claim 3, **characterized in that in that** the one or more retaining arms (7) are arranged on the radially encircling lateral region of the support ring (6).

5. Drive device according to either of Claims 3 and 4, **characterized in that** the retaining arms are designed to spring radially inwardly.

6. Drive device according to one of Claims 3 to 5, **characterized in that** the support ring (6) has, in the region next to the retaining arm (7), one or more spacers (8) which are directed towards the electric motor (2) and which have the end sides of their free ends bearing against the end side (3) of the electric motor (2) that faces the support ring (6).

7. Drive device according to one of the preceding claims, **characterized in that** the support ring (6) is urged against the electric motor (2) by an elastic component.

8. Drive device according to Claim 7, **characterized in that** the elastic component is a ring-like or disc-like component (17) composed of an elastic material that acts on the support ring (6) on its side facing away from the electric motor (2) and is supported on the housing tube or on a component connected to the housing tube (1).

9. Drive device according to Claim 7, **characterized in that** the ring-like or disc-like component (17) has its side facing away from the support ring (6) supported against a closure cap (18) which closes the housing tube (1).

10. Drive device according to one of the preceding claims, **characterized in that** a spindle drive having a threaded spindle and a spindle nut can be rotatably driven by the electric motor (2).

## Revendications

1. Dispositif d'entraînement destiné à l'ajustement motorisé d'un composant mobile d'un véhicule automobile, comprenant un tuyau de carter (1) dans lequel est disposé un moteur électrique tournant (2) qui présente un carter (4) qui est fermé par un embout (5), le moteur électrique (2) présentant un rotor doté d'un aimant permanent à aimantation radiale, comprenant un dispositif capteur disposé à une certaine distance du moteur électrique (2) pour une détection sans contact de la rotation du rotor du moteur électrique (2) qui présente au moins un capteur à effet Hall (14) disposé sur une platine de support (13), la platine de support (13) étant portée par une bague d'appui (6) qui est disposée dans le tuyau de carter (1) en prenant appui axialement sur le carter (4) du moteur électrique (2), **caractérisé en ce que** le capteur à effet Hall (14) se trouve à une certaine distance axiale des aimants permanents du rotor du moteur électrique (2), et le champ magnétique de l'aimant permanent du rotor du moteur électrique (2) est détecté par le capteur à effet Hall (14), et la bague d'appui (6) est reliée par complémentarité de forme et/ou par adhérence au carter (4) du moteur électrique (2).

2. Dispositif d'entraînement selon la revendication 1, **caractérisé en ce que** la bague d'appui (6) est reliée au moteur électrique (2) au moyen d'un raccordement par encliquetage.

3. Dispositif d'entraînement selon l'une quelconque des revendications précédentes, **caractérisé en ce que** la bague d'appui (6) présente un ou plusieurs bras de retenue axiaux (7) qui font saillie dans des rainures de retenue (9) correspondantes au niveau de la zone d'extrémité du moteur électrique (2), tournée vers la bague d'appui (6), les bras de retenue (7) présentant une ou plusieurs rallonges d'encliquetage (10) qui viennent en prise dans des évidements d'encliquetage correspondants dans une ou plusieurs des parois des rainures de retenue ou qui sont en butée par adhérence contre une ou plusieurs des parois (11) des rainures de retenue (9).

4. Dispositif d'entraînement selon la revendication 3, **caractérisé en ce que** le ou les bras de retenue (7) sont disposés sur la zone d'enveloppe radialement périphérique de la bague d'appui (6).

5. Dispositif d'entraînement selon l'une quelconque des revendications 3 et 4, **caractérisé en ce que** les bras de retenue sont réalisés de manière élastique radialement vers l'intérieur.

6. Dispositif d'entraînement selon l'une quelconque des revendications 3 à 5, **caractérisé en ce que** la bague d'appui (6) présente dans la zone près du bras de retenue (7) un ou plusieurs écarteurs (8), tournés vers le moteur électrique (2), qui sont en butée par les faces frontales de leurs extrémités libres contre la face frontale (3) du moteur électrique (2), tournée vers la bague d'appui (6).

7. Dispositif d'entraînement selon l'une quelconque des revendications précédentes, **caractérisé en ce que** la bague d'appui (6) est sollicitée par un composant élastique contre le moteur électrique (2).

8. Dispositif d'entraînement selon la revendication 7, **caractérisé en ce que** le composant élastique est un composant (17) de type bague ou rondelle en matière élastique qui sollicite la bague d'appui (6) sur son côté détourné du moteur électrique (2) et qui prend appui sur le tuyau de carter ou un composant relié au tuyau de carter (1).

9. Dispositif d'entraînement selon la revendication 7, **caractérisé en ce que** le composant de type bague ou rondelle (17) prend appui par son côté détourné de la bague d'appui (6) sur un bouchon de fermeture (18) fermant le tuyau de carter (1).

10. Dispositif d'entraînement selon l'une quelconque des revendications précédentes, **caractérisé en ce que** le moteur électrique (2) peut entraîner en rotation un mécanisme à vis présentant une broche filetée et un écrou de broche.
